Europäisches Patentamt

(19) European Patent Office  (11) Publication number: **0 018 210**

Office européen des brevets  **B2**

(12) NEW EUROPEAN PATENT SPECIFICATION

(45) Date of publication of the new patent specification: **20.07.88**

(21) Application number: **80301239.2**

(22) Date of filing: **17.04.80**

(51) Int. Cl.⁴: **B 29 D 17/00**

(54) Moulding apparatus for record discs.

(30) Priority: **18.04.79 US 31205**

(43) Date of publication of application:
**29.10.80 Bulletin 80/22**

(45) Publication of the grant of the patent:
**20.07.88 Bulletin 88/29**

(45) Mention of the opposition decision:
**20.02.85 Bulletin 85/08**

(84) Designated Contracting States:
**AT BE CH DE FR GB IT LI LU NL SE**

(56) References cited:
**CA-A- 778 318**
**CH-A- 453 671**
**DE-B- 27 116**
**DE-C- 487 243**
**DE-C-1 093 576**
**DE-C-1 094 996**
**DE-C-1 232 727**
**FR-A-1 507 289**
**GB-A- 23 732**
**GB-A- 948 476**
**GB-A-1 209 155**
**GB-A-1 301 095**
**US-A- 941 291**

(73) Proprietor: **DISCOVISION ASSOCIATES**
**P.O. Box 6600 3300 Hyland Avenue**
**Costa Mesa California 92626 (US)**

(72) Inventor: **Holmes, John R.**
**9661, Blake Avenue**
**Garden Grove California 92644 (US)**

(74) Representative: **Arthur, George Fitzgerald et al**
**KILBURN & STRODE 30, John Street**
**London WC1N 2DD (GB)**

(56) References cited:
**US-A-1 737 619**
**US-A-2 613 395**
**US-A-2 992 455**
**US-A-3 937 779**

## Description

This invention relates generally to moulding apparatus for example injection moulding apparatus for producing centrally apertured record discs, such as video discs, and including first and second mould halves reciprocally movable between a closed position, wherein molten disc material is injected into an annular cavity to form a disc, and an open position wherein the parting line which passes through the cavity, is opened and the moulded video disc can be removed from the apparatus. The annular cavity can be defined by a pair of planar, disc-shaped stampers secured to platens on the respective mould halves.

German published Patent Application No. p27116 IX a/42 g was filed in 1948, by Deutsche Grammophon GmbH and teaches a method of moulding conventional gramophone records by having two mould halves, each of which can have a die releasably mounted in it. The die is of metal foil and is normally spot welded into the mould half, but the specification explains that if the mould is to be used for producing different records, then the die needs to be removable from the main mould, and accordingly the die can be received in a special auxiliary mould which can in turn be screwed into the main mould.

In an earlier proposal each stamper has a central opening and is secured at its inner periphery by a special centre clamp and at its outer periphery by a special outer ring clamp.

When molten material is injected into the cavity it is necessary for the air to be vented and that occurs through a narrow gap between the stamper for the second mould half and a radially inwardly projecting annular foot that is integral with an outer ring clamp for the first mould half. Variations in stamper thickness can affect the size of the vent passage and result in undesired variation in the back pressure due to the venting air.

That difficulty is overcome by the provision of a moulding apparatus of the kind specified in the pre-characterising part of claim 1 that, according to the invention, also has the features specified in the characterising part of claim 1.

The arrangement means that the sizes of the vent ports are not dependent on the thickness of the stamper, so that a predetermined back pressure for the injected material can be maintained. The delicate mounting of the stamper on the plate can be accomplished at a remote clean location and then the plate with the stamper mounted on it can be secured relatively easily in the mould half with little likelihood of incurring damage to the stamper.

Thus, moulding apparatus in accordance with the present invention provides a solution to the problem described above which arise with prior art apparatus.

The invention may be carried into practice in various ways, and certain embodiments will now be described by way of example with reference to the accompanying drawings in which:

FIG. 1 is a cross-sectional view of a moulding apparatus in a closed position;

FIG. 2 is a cross-sectional view of the apparatus of FIG. 1 after being moved to an intermediate position, wherein the central aperture is punched in the moulded video disc, the view being taken substantially along the line 2—2 in FIG. 4;

FIG. 3 is a partial cross-sectional view of the apparatus of FIG. 1 after being moved to an open position;

FIG. 4 is a plan view of the first mould half of the apparatus, taken substantially along the line 4—4 in FIG. 1;

FIG. 5 is a detailed cross-sectional view of a portion of the means for maintaining the first and second mould halves in alignment when the apparatus is in the closed position, the view being taken substantially along the line 5—5 in FIG. 4;

FIG. 6 is an enlarged cross-sectional view of a portion of the center clamp for securing a stamper to its underlying plate, lying within the circle 6 in FIG. 3;

FIG. 7 is an enlarged cross-sectional view of a portion of the annular rings in FIG. 1; and

FIG. 8 is an enlarged cross-sectional view of a portion of the annular rings in an alternative embodiment of the invention that includes a polished dummy plate, rather than a dummy stamper.

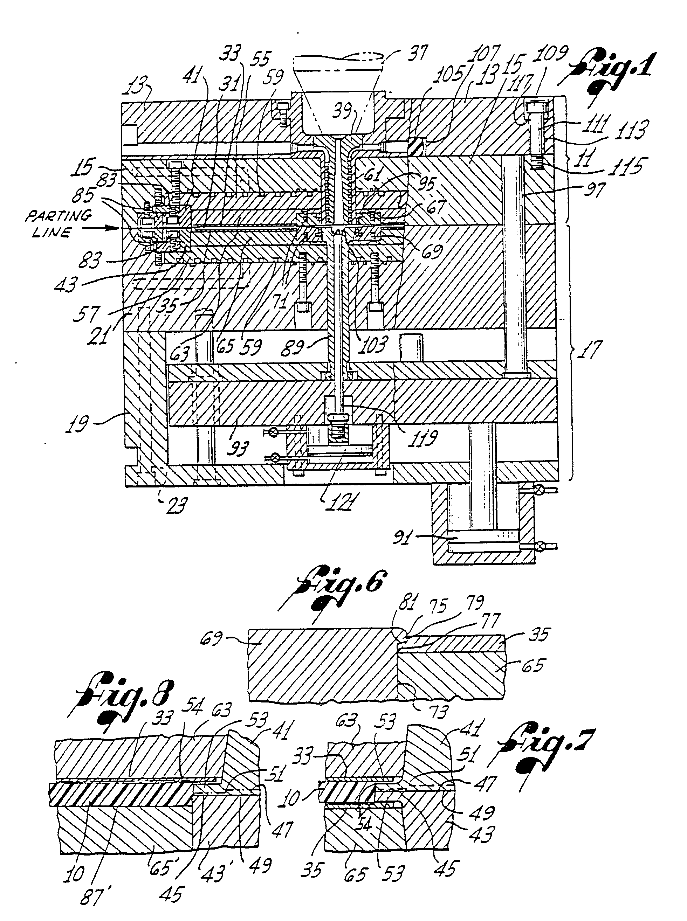

Referring now to the drawings, and particularly to FIG. 1, there is shown a moulding apparatus for use in combination with a conventional injection moulding machine (not shown) to produce a centrally-apertured video disc record 10. The apparatus includes a first mould half 11, having a base plate 13 and a carrier plate 15, and a second mould half 17, also having a base plate 19 and a carrier plate 21.

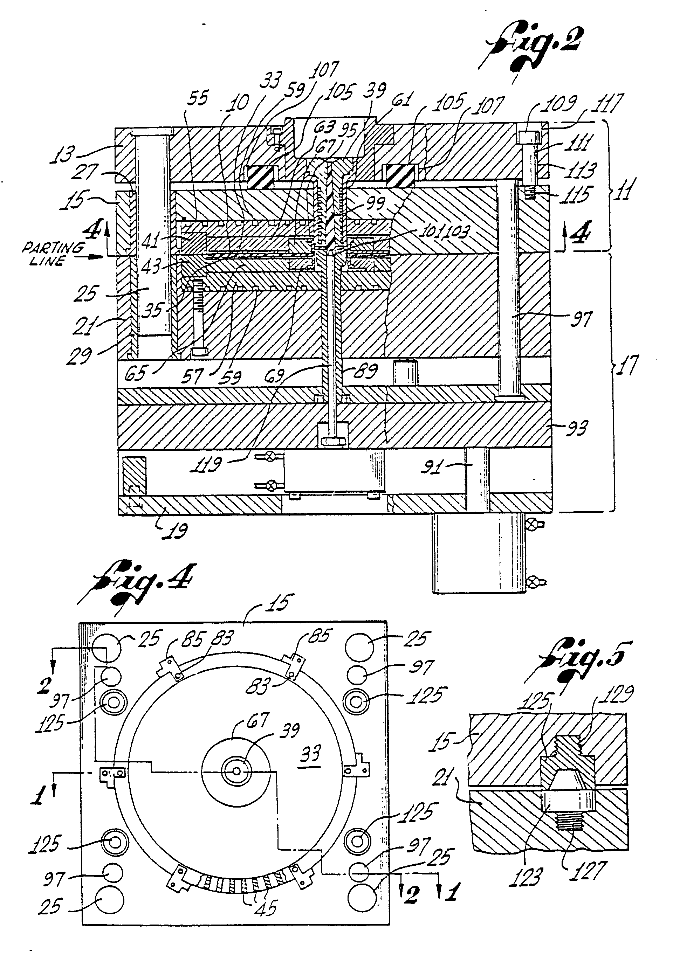

The two plates 13 and 15 of the first mould half 11 are reciprocably movable with respect to each other between a closed position (FIG. 1), wherein they are in abutment, and an intermediate or punch position (FIG. 2), wherein they are spaced apart from each other by a prescribed amount. The two plates 19 and 21 of the second mould half 17, on the other hand, are rigidly coupled to each other by means of a plurality of circumferentially-spaced bolts, one of which is shown in phantom lines at 23. A coarse alignment between the two mould halves is achieved by means of a plurality of guide pins 25 (FIG. 2), which are fixed to the base plate 13 of the first mould half 11, and which are slidably received in bushings 27 and 29 in the carrier plates 15 and 21 of the first and second mould halves 11 and 17, respectively.

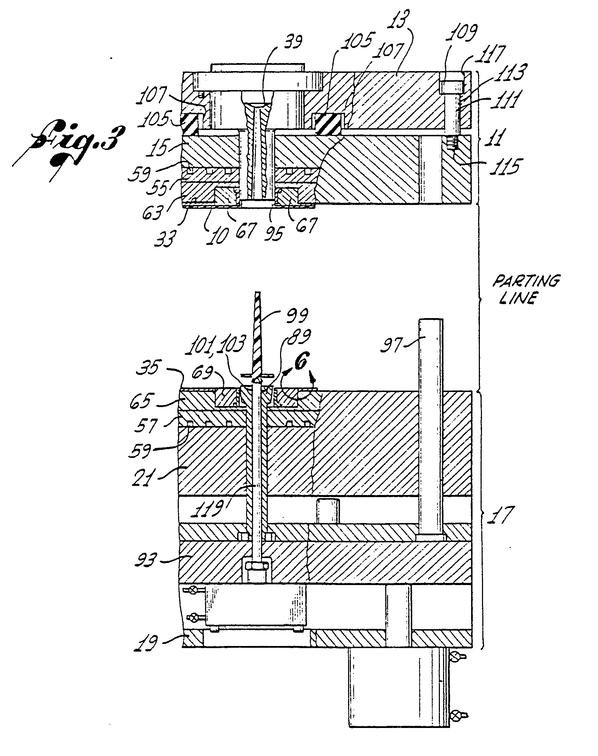

The base plates 13 and 19 on the two mould halves 11 and 17, respectively, are secured to separate, reciprocating parts on the standard injection moulding machine (not shown). The moulding machine operates to move the two mould halves, in succession, from the closed position (FIG. 1), wherein they are in abutment and a molten plastic material is injected into an annular cavity 31 formed between them, to the intermediate or punch position (FIG. 2), wherein a central aperture is punched in the moulded video disc 10, and, in turn, to the open position (FIG. 3), wherein the parting line between the two mould halves is opened and the moulded disc can be removed. The annular cavity 31 between the two mould halves 11 and 17 is defined by first and second disc-shaped stampers 33 and 35, which are removably coupled to the carrier plate 15 of the first mould half and the carrier plate 21 of the second mould half, respectively. The molten material is injected into the cavity through a nozzle 37, which is a part of the moulding machine, and a sprue bushing 39 mounted on the first mould half base plate 13.

As shown in FIG. 1, the closed position of the moulding apparatus is determined by a compressive abutment between a first annular ring 41 and a second annular ring 43, which are carried on the first and second mould halves 11 and 17, respectively. In accordance with the present invention, the inner peripheries of the first and second rings define the outer perimeter of the annular cavity 31, and the rings include means defining a plurality of ports 45 for venting air from the annular cavity whenever molten plastic material is injected into it through the sprue bushing 39. The cross-sectional size of each port is fixed, so a predetermined back pressure for regulating the flow of the injected material can be maintained, regardless of variations in the relative thicknesses of either of the two stampers 33 and 35. This insures that the injected material will move radially outwardly within the cavity at a prescribed rate.

More particularly, and as shown in FIGS. 4 and 7, the first annular ring 41 includes a planar abutment face 47 for engagement with a corresponding abutment face 49 on the second annular ring 43, and the vent ports 45 are defined by a plurality of spaced radial channels formed in the abutment face of at least one of the two rings, herein the first ring. The cross-sectional size of each vent port enlarges, a prescribed distance from the inner periphery of the rings, as indicated by reference numeral 51. Additionally, the inner peripheries of the two annular rings are of substantially equal radius, and are beveled by approximately 10°, to insure that the moulded disc 10 will be retained by a selected one of the two mould halves, herein the first mould half 11, when the parting line of the apparatus is opened.

As shown in FIG. 7, the two annular rings 41 and 43 are substantially identical in shape, except for the vent ports 45 and the bevel of their inner pheripheries. The inner periphery of each ring is defined by an annular foot 53 that projects radially inwardly to retain the outer peripheral portion of the corresponding stamper 33 or 35. As indicated in exaggerated scale at 54, the feet are spaced slightly above their underlying stampers, to permit the stampers to expand radially, without undue friction, when heated by the molten plastic material injected into the cavity 31. The molten material is normally sufficiently viscous, especially after it has contacted the relatively cool stampers, that it does not travel any significant distance into any of the vent ports 45 or into the narrow space 54 between a ring and its underlying stamper.

The two carrier plates 15 and 21 include disc-shaped platens 55 and 57, respectively, having spiral cooling channels 59 for carrying a coolant fluid (not shown), to dissipate heat from the molten plastic material injected into the annular cavity 31.

The stampers 33 and 35 are secured not to their corresponding cooling platens 55 and 57, but, rather, to separate plates 63 and 65 that are, in turn, removably secured to the respective platens. Thus, the delicate procedure of mounting the stamper can be accomplished at a remote, clean location, after which the removable plate, with the stamper mounted thereon, can be secured relatively quickly and easily to its corresponding cooling platen. The likelihood of damaging the stamper by, for example, inadvertent abrasion is thereby reduced significantly.

As shown in FIG. 1, the two stampers 33 and 35 are clamped to their corresponding removable plates 63 and 65 by means of special center clamps 67 and 69, respectively, which, in turn, are secured to the plates by means of a plurality of circumferentially-spaced screws, as indicated at 71. The two clamps are substantially identical, so the structures of only one of the clamps, i.e., the clamp 69 on the second mould half 17, and of the corresponding stamper 35, will be described in detail.

As shown in FIG. 6, the stamper 35 has an inner periphery that defines a central aperture, and the corresponding center clamp 69 for the stamper has a cylindrical post 73 that projects upwardly through the aperture, with an annular finger 75 projecting radially outwardly from the top of the post to conformably engage a corresponding beveled recess formed in the inner periphery of the stamper.

More specifically, the inner periphery of the stamper 35 preferably includes a lower, vertical wall 77 for conforming engagement with the post portion 73 of the clamp 69, an upper wall 79 for conforming engagement with the outer periphery of the annular finger 75 of the clamp, and an intermediate beveled portion 81 for conforming engagement with a corresponding bevel on the underside of the finger 75. This special conforming arrangement permits the stamper to be quickly and easily mounted, and ensures substantial concentricity of the stamper relative to the clamp. The inner periphery of the stamper can be conveniently formed in the stamper using a conventional punching apparatus.

As shown in FIG. 7, the radially inwardly projecting annular foot 53 in each of the annular rings 41 and 43 functions to retain the outer periphery of the corresponding stamper 33 or 35, ensuring that the stamper will remain planar and that the annular cavity 31 will have a prescribed thickness over its entire radius. Each ring is secured to its corresponding removable plate by means of a plurality of circumferentially-spaced screws 83. With their particular center clamps and annular rings in place, the removable plates 63 and 65 can be secured relatively quickly to their corresponding cooling platens 55 and 57 by means of a plurality of locking tabs 85 (FIGS. 1 and 4).

In another embodiment of the present invention, the annular ring portion of which is shown in FIG. 8, the moulding apparatus includes only a single stamper 33, located on the first mould half 11 and the video discs 10 produced by the apparatus bear information on only one of their sides. In this embodiment, one side of the annular cavity 31 is defined by the stamper, and the other side is defined by the outer surface 87' of the removable plate 65' on the second mould half 17. This surface can be suitably hardened and polished, and is thus substantially less susceptible to damage from abrasion than were conventional dummy stampers utilized in prior moulding apparatus for producing discs bearing information on only one side. Additionally, the possibility of dimpling due to foreign particles being lodged under such dummy stampers is completely avoided. The annular ring 43' for the second mould half can be substantially cylindrical and need not include the radially inwardly projecting annular foot, which is ordinarily needed only to retain the outer periphery of a stamper.

FIGS. 1, 2, and 3 depict the sequence of operation of the moulding apparatus. FIG. 1 depicts the apparatus in the closed position, with the base plate 13 and the carrier plate 15 of the first mould half 11 in compressive abutment, and with the annular rings 41 and 43 of the respective first and second mould halves 11 and 17 also in compressive abutment. When in this closed position, the molten plastic disc material is injected into the annular cavity 31 between the two mould halves, to form the moulded video disc 10. FIG. 2 depicts the apparatus after it has moved to the intermediate or punch position, with the two annular rings still in abutment, but with the base plate and carrier plate of the first mould half separated by a prescribed amount. A central aperture is punched in the moulded video disc when the apparatus is in this intermediate position. FIG. 3 depicts the apparatus after it has moved to the open position, with the parting line between the two mould halves opened and the centrally-apertured moulded disc in position to be removed.

The moulding apparatus is moulded sequentially from the closed position (FIG. 1) to the intermediate or punching position (FIG. 2), and, in turn, to the open position (FIG. 3) by the moulding machine (not shown), which is coupled to the apparatus through the base plates 13 and 19 of the first and second mould halves 11 and 17, respectively. The machine functions to move the two base plates away from each other and toward each other in a reciprocal fashion, each complete cycle resulting in the formation of a separate video disc 10.

Initial movement apart of the two base plates 13 and 19 takes place only after the injected plastic material has cured. For reasons that will be discussed subsequently, this initial movement causes a separation of the base plate 13 and carrier plate 15 of the first mould half 11, while the parting line, which passes through the annular cavity 31, remains closed. This separation operates to move the sprue bushing 39, which is secured to the first mould half base plate 13, away from the moulded disc 10, producing a gap therebetween. After these two plates have moved apart by a prescribed amount, a punch 89 is thrust upwardly through the moulded disc 10 and into the gap between the disc and the sprue bushing by means of an air cylinder piston 91 that is coupled to the punch by means of a reciprocably-movable punch plate assembly 93. The upwardly moving punch cooperates with a hardened die element 95 secured to the center clamp 67 of the first mould half 11 to form the central aperture in the moulded disc.

Upward movement of the punch plate assembly 93 and the punch 89 is limited by a plurality of stroke limiter pins 97 that are secured to the plate assembly and that come into abutment with the underside of the base plate 13 of the first mould half 11 after the aperture has been punched. The portion of the disc 10 that is severed to form the aperture, along with an integral sprue 99, which is disposed within the sprue bushing 39, is held in place by means of an undercut 101 formed in an annular recess 103 in the top surface of the punch.

The parting line is held closed during the initial movement apart of the moulding machine by means of a plurality of compression springs 105 interposed between the base plate 13 and the carrier plate 15 of the first mould half 11, whereby the carrier plate is biased in the direction of the carrier plate 21 of the second mould half 17. More particularly, the compression springs comprise solid blocks of polyurethane material disposed in recesses 107 spaced circumferentially in the base plate 13. The springs are essentially maintenance free. The uncompressed thickness of each spring is approximately one inch, but under compression, with the base plate 13 and carrier plate 15 in abutment, the thickness diminishes to approximately $\frac{3}{4}$ of an inch. The punching of the central aperture in the moulded disc 10 occurs while the compression springs are still under sufficient compression to resist the force of the punch 89 and hold the parting line firmly closed.

As shown in FIGS. 1 and 2, movement apart of the base plate 13 and the carrier plate 15 of the first mould half 11 is limited by means of a plurality of bolts, one of which is shown at 109. Each bolt has a shank portion 111 that extends through a throughbore 113 in the base plate to engage a threaded bore 115 in the carrier plate. The head of the bolt is disposed in a countersunk portion 117 of the throughbore, and after the moulding machine has moved the base plate and carrier plate apart by a prescribed amount, the underside of the bolt head will come into abutment with the bottom of the countersunk portion, to limit further movement apart of the two plates. Thereafter, further movement of the moulding machine will operate to open the parting line of the apparatus, as shown in FIG. 3, and permit removal of the moulded video disc 10.

After the apparatus has been moved into the open position (FIG. 3), the sprue 99 that has been separated from the moulded disc 10 is disengaged from the undercut 101 in the punch recess 103 by means of a sprue ejector pin 119, which is actuated by an air cylinder piston 121.

As shown in FIG. 2, a coarse alignment of the first and second mould halves 11 and 17 with respect to each other is achieved by means of the plurality of guide pins, one of which is shown at 25, mounted on the base plate 13 of the first mould half 11 and engageable in the bushings 27 and 29 located in the carrier plate 15 of the first mould half 11 and in the carrier plate 21 of the second mould half 17, respectively. This pin/ bushing arrangement is not generally capable of maintaining a precise alignment between the two mould halves for an extended period of usage, because the repeated reciprocal motion of the two mould halves ordinarily causes at least a limited degree of wear in the pins and bushings.

The moulding apparatus includes additional alignment means not subject to any substantial sliding friction during the reciprocal movement of the two mold halves 11 and 17. More particularly, as shown in FIGS. 4 and 5, this alignment means includes a plurality of frusto-conical posts 123 projecting outwardly from the carrier plate 21 of the second mould half 17 to engage corresponding frusto-conical recesses 125 formed in the carrier plate 15 of the first mould half 11. Thus, each post is in contact with its corresponding recess only when the parting line is closed. It bears note that only when the parting line is closed a precise alignment between the two mould halves is of critical importance. In one embodiment, both the posts and the recesses are formed in individual elements that are threadedly received in sockets 127 and 129 arranged in spaced circumferential relationship around the peripheries of the stampers 33 and 35 in the respective carrier plates 15 and 21.

## Claims

1. A moulding apparatus for producing record discs (10), said apparatus including first and second mould halves (11, 17) defining an annular cavity (31) therebetween into which molten material is injected to form a record disc (10), said apparatus further including a disc-shaped stamper (33) defining one side of the annular cavity, and held against, and centered in, a plate (63) which is removably secured to a platen (55) forming a part of said first mould half (11), the stamper being removably mounted on the plate (63), said apparatus also comprising a first annular ring (41) having an inwardly projecting annular foot (53) to retain the outer periphery of the stamper and a second annular ring (43) on said second mould half (17), a planar outer face of the first annular ring (41) engaging a planar outer face of the second annular ring (43), characterised by said first annular ring (41) being removably secured to said plate (63) and at least one of the rings including means defining a plurality of vent ports (45) arranged in spaced relationship around their inner peripheries to vent air from the annular cavity whenever molten material is being injected therein.

2. A moulding apparatus as defined in Claim 1 wherein said inwardly projecting annular foot (53) is sized to permit said stamper (33) to expand radially without substantial frictional resistance, when heated by the molten material injected into the cavity (31).

3. A moulding apparatus as defined in any preceding claim, wherein the inner periphery of at least one of said first and second annular rings (41, 43) is beveled, whereby the moulded record disc is gripped by the ring when the apparatus is moved to the open position.

4. A moulding apparatus as defined in any preceding claim, wherein the vent ports (45) are defined by radial grooves in the abutment face of at least one of said first and second annular rings (41, 43).

5. An apparatus as claimed in any preceding claim wherein the cross-sectional area of each vent port (45) increases a certain distance from the inner peripheries of the annular rings (41, 43).

6. A moulding apparatus as claimed in any preceding claim in which each of the mould halves includes a platen (55, 57) having means (59) for dissipating heat from the molten material injected into the cavity (31).

7. An apparatus as defined in any preceding claim including a second plate (65) removably secured to a second mould half platen (57) one surface (87') of the second plate being polished and defining a second side of the annular cavity (31).

8. An apparatus as defined in any one of claims 1—6 including a second plate (65) removably secured to a second mould half platen (57), a second disc-shaped stamper (35) being removably mounted on the second plate.

9. An apparatus as defined in Claim 7 or Claim 8 including a plurality of locking tabs (85) for removably securing the plate (63) to the first mould half plate (55).

10. A method of moulding record discs (10), comprising the steps of: removably mounting at least one disc-shaped stamper (33) to form at least one side of an annular cavity (31) between two mould halves (11, 17) defined by platens (55, 57) and injecting molten material into said cavity to form a disc, said mounting step including centering and mounting said stamper on a plate (63) and subsequently securing said plate with said stamper mounted thereon to the first platen (55) defining the first mould half (11), a first annular ring (41) being provided having an inwardly projecting annular foot (53) to retain the outer periphery of the stamper (33), and a second annular ring (43) being secured to the second mould half (17), the outer faces of both rings engaging each other, and air being vented from the cavity during injection, characterised in that said stamper is mounted on said plate (63) at a clean location remote from said platens and that the air is vented from the cavity through vent ports (45) spaced around the periphery of the cavity, the vent ports being defined by means that are provided in at least one of said annular rings, the vent ports being arranged in spaced relationship around the inner peripheries of the rings, the first ring being removably secured to said plate (63).

11. A method as claimed in Claim 10 in which during moulding, heat is dissipated from the molten material through the platens (55, 57).

**Patentansprüche**

1. Gießformgerät zum Herstellen von Aufzeichnungsplatten (10), welches Gerät erste und zweite Formhälften (11, 17) enthält, die einen ringförmigen Hohlraum (31) dazwischen definieren, in den geschmolzenes Material zur Formung einer Aufzeichnungsplatte (10) gespritzt wird, welches Gerät ferner eine scheibenförmige Preßmatrize (33) enthält, die eine Seite des ringförmigen Hohlraumes definiert und gegen eine Platte (63) gehalten und in dieser zentriert ist, die abnehmbar an einer Druckplatte (55) befestigt ist, die einen Teil der ersten Formhälfte (11) bildet, wobei die Preßmatrize (33) an der Platte (63) abnehmbar angebracht ist, welches Gerät ferner ein erstes Ringglied (41) das einen einwärts vorstehenden ringförmigen Fuß (53) aufweist, um den Außenrand der Preßmatrize (33) festzuhalten, und eine zweites Ringglied (43) an der zweiten Formhälfte (17) aufweist, wobei eine ebene Außenfläche des ersten Ringgliedes (41) an einer ebenen Außenfläche des zweiten Ringgliedes (43) anliegt, dadurch gekennzeichnet, daß das erste Ringglied (41) abnehmbar an der Platte (63) befestigt ist und wenigstens eines der Ringglieder Mittel enthält, die eine Vielzahl von Lüftungsöffnungen (45) definieren, die mit Abstand rund um ihre Innenränder angeordnet sind, um immer dann Luft aus dem ringförmigen Hohlraum abzulassen, wenn geschmolzenes Material in ihn gespritzt wird.

2. Gießformgerät nach Anspruch 1, bei dem der einwärts vorspringende ringförmige Fuß (53) bemessen ist, um der Preßmatrize (33) ein radiales Expandieren ohne wesentlichen Reibungswiderstand zu erlauben, wenn sie durch das in den Hohlraum (31) gespritzte geschmolzene Material erhitzt wird.

3. Gießformgerät nach einem beliebigen vorhergehenden Anspruch, bei dem der Innenrand wenigstens eines der zwei Ringglieder (41, 43) abgeschrägt ist, wodurch die geformte Aufzeichnungsplatte vom Ringglied ergriffen wird, wenn das Gerät in die Offenstellung bewegt wird.

4. Gießformgerät nach einem beliebigen vorhergehenden Anspruch, bei dem die Lüftungsöffnungen (45) durch radiale Nuten in der Anlagefläche wenigstens eines der zwei Ringglieder (41, 43) definiert sind.

5. Gerät nach einem beliebigen vorhergehenden Anspruch, bei dem die Querschnittsfläche einer jeden Lüftungsöffnung (45) in einem bestimmten Abstand von den Innenrändern der Ringglieder (41, 43) zunimmt.

6. Gießformgerät nach einem beliebigen vorhergehenden Anspruch, bei dem jede der Formhälften eine Druckplatte (55, 57) mit Mitteln (59) zum Abführen von Wärme vom in den Hohlraum (31) gespritzten geschmolzenen Material enthält.

7. Gerät nach einem beliebigen vorhergehenden Anspruch, mit einer zweiten Platte (65'), die an einer Druckplatte (57) der zweiten Formhälfte abnehmbar befestigt ist, wobei eine Oberfläche (87') der zweiten Platte poliert ist und eine zweite Seite des ringförmigen Hohlraums (31) definiert.

8. Gerät nach einem der Ansprüche 1—6, mit einer zweiten Platte (65), die an einer Druckplatte (57) der zweiten Formhälfte abnehmbar befestigt ist, wobei eine zweite scheibenförmige Preßmatrize (35) an der zweiten Platte abnehmbar befestigt ist.

9. Gerät nach Anspruch 7 oder 8, mit einer Vielzahl von Verriegelungslappen (85) zur abnenmbaren Befestigung der Platte (63) an der Druckplatte (55) der ersten Formhälfte.

10. Verfahren zum Formel von Aufzeichnungsplatten, mit den Schritten, daß wenigstens eine scheibenförmige Preßmatrize (33) zur Bildung wenigstens einer Seite eines ringförmigen Hohlraums (31) zwischen zwei Formhälften (11, 17), die durch Druckplatten (55, 57) definiert sind, abnehmbar befestigt und geschmolzenes Material zur Formung einer Platte in den Hohlraum gespritzt wird, wobei der Befestigungsschritt die Zentrierung und Befestigung der Preßmatrize an einer Platte (63) und die nachfolgende Befestigung der Platte mit der daran angebrachten Preßmatrize an der ersten Druckplatte (55) enthält, die die erste Formhälfte (11) definiert, wobei ein erstes Ringglied (41), das einen einwärts vorstehenden ringförmigen Fuß (53) aufweist, um den Außenrand der Preßmatrize (33) festzuhalten, vorgesehen und ein zweites Ringglied (43) an der zweiten Formhälfte (17) befestigt wird, wobei die Außenflächen der beiden Ringglieder aneinander anliegen, und wobei während des Einspritzvorganges Luft aus dem Hohlraum abgelassen wird, dadurch gekennzeichnet, daß die Preßmatrize an der Platte (63) an einer sauberen Stelle fern von den Druckplatten befestigt wird, und daß die Luft aus dem Hohlraum durch Lüftungsöffnungen (45) abgelassen wird, die rund um den Umfang des Hohlraums in Abständen angeordnet sind, wobei die Lüftungsöffnungen durch Mittel definiert sind, die in zumindest einem der Ringglieder vorgesehen sind, wobei die Lüftungsöffnungen in Abständen rund um die Innenränder der Ringglieder angeordnet sind, wobei das erste Ringglied abnehmbar an der Platte (63) befestigt ist.

11. Verfahren nach Anspruch 10, in dem während des Formvorganges Wärme vom geschmolzenen Material über die Druckplatten (55, 57) abgeführt wird.

## Revendications

1. Appareil de moulage pour produire des disques (10), comprenant des première et seconde moitiés de moule (11, 17) définissant une cavité annulaire (31) entre elles, dans laquelle une matière fondue est injectée pour former un disque (10), ledit appareil comprenant de plus un estampeur en forme de disque (33) définissant un côté de la cavité annulaire, et maintenu contre, et centré dans, une plaque (63) qui est fixée amoviblement à un plateau (55) formant une partie de ladite première moitié de moule (11), l'estampeur étant monté amoviblement sur la plaque (63), ledit appareil comprenant aussi une première bague annulaire (41) ayant une patte annulaire faisant saillie vers l'intérieur (53) pour retenir la périphérie externe de l'estampeur et une seconde bague annulaire (43) sur ladite seconde moitié de moule (17), une face plane externe de la première bague annulaire (41) engageant une face plane externe de la seconde bague annulaire (43), caractérisé en ce que ladite première bague annulaire (41) est fixée amoviblement à ladite plaque (63) et en ce qu'au moins l'une des bagues comprend un moyen définnissant un certain nombre d'orifices d'évent (45) agencés en relation espacée autour de leurs périphéries internes pour éventer l'air de la cavité annulaire chaque fois qu'un matériau fondu est injecté dans celle-ci.

2. Appareil de moulage selon la revendiction 1, caractérisé en ce que ladite patte annulaire faisant saillie vers l'intérieur (53) est dimensionnée pour permettre audit estampeur (33) de s'étendre radialement sans résistance frictionelle substantielle, lorsque chauffé par la matière fondue injectée dans la cavité (31).

3. Appareil de moulage selon l'une des revendications précédentes, caractérisé en ce que la périphérie interne d'au moins l'une des première et seconde bagues annulaires précitées (41, 43) est chanfreinée, ainsi le disque moulé est serré par la bague lorsque l'appareil est déplacé à la position ouverte.

4. Appareil de moulage selon l'une des revendications précédentes, caractérisé en ce que les orifices d'évent (45) sont définis par des rainures radiales dans la face d'aboutement d'au moins l'une des première et seconde bagues annulaires précitées (41, 43).

5. Appareil de moulage selon l'une des revendications précédentes, caractérisé en ce que l'air en section transversale de chaque orifice d'évent (45) augmente à une certaine distance des périphéries internes des bagues annulaires (41, 43).

6. Appareil de moulage selon l'une des revendications précédentes, caractérisé en ce que chacune des moitiés du moule comprend un plateau (55, 57) ayant un moyen (59) pour dissiper la chaleur de la matière fondue injectée dans la cavité (31).

7. Appareil de moulage selon l'une des revendications précédentes, caractérisé en ce qu'il comprend une seconde plaque (65') fixée amoviblement à un plateau (57) de la seconde moitié de moule, une surface (87') de la seconde plaque étant polie et définissant un second côté de la cavité annulaire (31).

8. Appareil de moulage selon l'une des revendications 1 à 6, caractérisé en ce qu'il comprend une seconde plaque (65) fixée amoviblement à un plateau (57) de la seconde moitié de moule, un deuxième estampeur en forme de disque (35) étant monté amoviblement sur la seconde plaque.

9. Appareil de moulage selon la revendication 7 ou 8, caractérisé en ce qu'il comprend un certain nombre de manchons de blocage (85) pour fixer amoviblement la plaque (63) au plateau (55) de la première moitié de moule.

10. Procédé de moulage de disques (10), comprenant les étapes de: monter amoviblement au moins un estampeur en forme de disque (33) pour former au moins un côté d'une cavité annulaire (31) entre deux moietiés de moule (11, 17) définies par des plateaux (55, 57) et injecter une matière fondue dans ladite cavité pour former un disque, ladite étape de montage consistant à centrer et monter ledit estampeur sur une plaque (63) et fixer subséquemment ladite plaque avec ledit estampeur monté sur celle-ci au premier plateau (55) définissant la première moitié du moule (11), une première bague annulaire (41) étant prévue ayant une patte annulaire faisant saillie vers l'intérieur (53) pour retenir la périphérie externe de l'estampeur (33), et une seconde bague annulaire (43) étant fixée à la seconde moitié de moule (17), les faces externes des deux bagues s'engageant l'une l'autre, et l'air étant éventé de la cavité pendant l'injection, caractérisé en ce que ledit estampeur est monté sur ladite plaque (63) a un endroit propre éloigné desdits plateaux et en ce que l'air est éventé de la cavité par des orifices d'évent (45) espacés autour de la périphérie de la cavité, les orifices d'évent étant définis par des moyens qui sont prévus dans au moins l'une desdites bagues annulaires, les orifices d'évent étant agencés en relation espacée autour des périphéries internes des bagues, la première bague étant fixée amoviblement à ladite plaque (63).

11. Procédé selon la revendication 10, caractérisé en ce que, pendant le moulage, la chaleur est dissipée de la matière fondue par les plateaux (55, 57).

Fig.1

Fig.6

Fig.8

Fig.7

PARTING LINE →

1

*fig.2*

*fig.4*

*fig.5*

Fig.3

PARTING LINE